(19) Europäisches Patentamt
European Patent Office
Office européen des brevets

(11) **EP 4 567 717 B1**

(12) # EUROPEAN PATENT SPECIFICATION

(45) Date of publication and mention
of the grant of the patent:
**15.10.2025 Bulletin 2025/42**

(51) International Patent Classification (IPC):
***G06T 5/73*** *(2024.01)*      ***G06T 7/90*** *(2017.01)*

(52) Cooperative Patent Classification (CPC):
**G06T 5/73; G06T 7/90;** G06T 2207/10048

(21) Application number: **23214484.0**

(22) Date of filing: **06.12.2023**

(54) **METHOD FOR ESTIMATING RADIANCE OF AN OBJECT**

VERFAHREN ZUR SCHÄTZUNG DER STRAHLUNG EINES OBJEKTS

PROCÉDÉ D'ESTIMATION DE LA LUMINANCE D'UN OBJET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**11.06.2025 Bulletin 2025/24**

(73) Proprietor: **Axis AB**
**223 69 Lund (SE)**

(72) Inventor: **Winzell, Thomas**
**223 69 Lund (SE)**

(74) Representative: AWA Sweden AB
Box 5117
200 71 Malmö (SE)

(56) References cited:
**US-A1- 2009 144 003**

• **ALVAREZ-RÍOS F J ET AL: "Optical modeling and simulation of subpixel target infrared detection", PROCEEDINGS OF THE SPIE, SPIE, US, vol. 11865, 12 September 2021 (2021-09-12), pages 1186508 - 1186508, XP060147195, ISSN: 0277-786X, ISBN: 978-1-5106-5738-0, DOI: 10.1117/12.2600077**
• **GEMAR H ET AL: "Validation of an infrared sensor model with field collected imagery of unresolved unmanned aerial vehicle (UAV) targets", SPIE PROCEEDINGS; [PROCEEDINGS OF SPIE ISSN 0277-786X], SPIE, US, vol. 11001, 14 May 2019 (2019-05-14), pages 110010E - 110010E, XP060121997, ISBN: 978-1-5106-3673-6, DOI: 10.1117/12.2527191**
• **YOUNG SHANNON R ET AL: "Development and validation of the AFIT scene and sensor emulator for testing (ASSET)", PROCEEDINGS OF SPIE; [PROCEEDINGS OF SPIE ISSN 0277-786X VOLUME 10524], SPIE, US, vol. 10178, 3 May 2017 (2017-05-03), pages 101780A - 101780A, XP060088733, ISBN: 978-1-5106-1533-5, DOI: 10.1117/12.2262193**

**Description**

TECHNICAL FIELD

The present invention generally relates to thermal imaging, in particular to a method for estimating a radiance of an object in a scene.

BACKGROUND

Thermal cameras are used in various monitoring applications and enable thermal imaging of a scene as well as remote temperature measurements. In some installations, a radiometric thermal camera is used for remote temperature monitoring, for instance for early fire detection and/or detecting over-heating of an object in the monitored scene. For an accurate temperature measurement, it is thus important that the pixels depicting the monitored object receive a radiance as close as possible to the actual radiance emitted by the monitored object.

Error sources in conventional thermal camera monitoring systems include losses due to reflection and absorption of radiation in the optical system of the thermal camera, as well as sensor noise. Typical approaches for limiting the impact of such error sources include calibration measurements for characterizing and compensating for losses in the optical system, and frame-averaging and/or signal processing algorithms for suppressing noise.

Another error source is the blending in the pixels of the image sensor of the object radiance with the surrounding background radiance due to the finite resolution of the thermal camera, in other words the diffraction-induced blurring in the thermal camera. Due to the wavelengths relevant to thermal imaging applications (IR), blurring due to diffraction may be relatively pronounced in thermal images. Diffraction may typically be seen as a smoothing or smearing of the object edges. By way of example, a typical blur radius of the diffraction-induced blurring in the sensitive range relevant for a microbolometer-based image sensor, and the pixel size of such an image sensor, may be each be about 15 $\mu$m.

US 2009/144003 A1 (Murata) describes a method for determining the amplitude of an infrared object may include receiving an infrared image of the object from a sensor, and expressing the objects infrared amplitude as a function of its position coordinates. The sum of the squared residuals of the objects true infrared response and a model of the objects infrared response may be minimized to determine the centroid of the infrared image. The objects infrared amplitude may then determined based on the centroid location.

Alvarez-Ríos et al.: "Optical modeling and simulation of subpixel target infrared detection", Proceedings of the SPIE, SPIE, US, vol. 11865, 12 September 2021, pages 1186508-1186508 describes a mixed approach for the infrared imager, using commercial key performance parameters, experimental measurements, parametric and ray-tracing based modeling to fully characterize main radiometric, angular an temporal responses. Optical subpixel detection considers the intrinsic parameters of the wide field of view optics and focal plane array sensor such as, the angular distortion, the point spread function (PSF) or, the detector spatial and temporal noise and the radiometric response.

Gemar et al.: "Validation of an infrared sensor model with field collected imagery of unresolved unmanned aerial vehicle (UAV) targets", Proceedings of the SPIE, SPIE, US, vol. 11001, 14 May 2019, pages 110010E-110010E describes an IR sensor model which is validated using experimentally derived peak pixel SNR versus range for detection of either an unresolved or a resolved UAV target.

SUMMARY

As realized by the inventor, diffraction-induced blurring may in particular have a notable impact in applications involving temperature monitoring of small objects. By "small object" is here meant an object which subtends an area in the monitored scene which is so small that when imaged on the image sensor of the thermal camera, there is no pixel in the thermal image which includes only a radiance contribution from the object, but each "object pixel" depicting the object will be a "mixed pixel" including a blend or mixture of the radiance contribution from the object and a radiance contribution from a thermal background to the object. The radiance of the mixed pixels will hence not correctly reflect the actual radiance of the object, and consequently result in an incorrect temperature measurement of the object.

Thus, it is an object of the present invention to provide a method allowing a more reliable and accurate estimation of a radiance of a small object in a scene. Further and alternative objectives may be understood from the following.

According to a first aspect of the present invention, there is provided a method for estimating a radiance of an object in a scene, the method comprising:

obtaining a thermal image of the scene, wherein the thermal image is acquired by an image sensor of a radiometric thermal camera, wherein the thermal image comprises an apparent object region depicting the object, and wherein, due to blurring of the thermal image caused by diffraction, each pixel value in the apparent object region comprises a radiance contribution from the object and a radiance contribution from a thermal background;

obtaining object data indicative of a location and an extension of an actual object region forming a sub-region of the apparent object region, wherein the actual object region is such that each pixel value in the actual object region, in absence of blurring, would comprise a radiance contribution from the object but not the thermal background; determining a representative background radiance of the thermal background; obtaining a blur parameter indicative of a blur radius of a blur spot; determining a pixel value of a sample pixel of the apparent object region; determining for the sample pixel: an object radiance contribution factor based on a number of actual object pixels located within the blur radius from the sample pixel, and a background radiance contribution factor based on a number of actual background pixels located within the blur radius from the sample pixel, wherein each actual object pixel is a pixel within the actual object region and each actual background pixel is a pixel outside the actual object region; and estimating a diffraction-compensated radiance of the object based on the pixel value of the sample pixel, the representative background radiance, and the object and background radiance contribution factors.

The present invention is hence at least partly based on the insight that, knowing the location and extension of the actual object region, the blurring radius of the characteristic blur spot caused by diffraction during imaging by the thermal camera, a pixel value of a sample pixel within the apparent (blurred) object region, and the representative background radiance for the object, a diffraction-compensated radiance (i.e. pixel value) of the object (i.e. the actual radiance of the object) may be estimated.

It is contemplated that for a small object, each actual object pixel would, to a good approximation, in absence of blurring have the same radiance. Correspondingly, each actual background pixel adjacent the actual object region would, to a good approximation, in absence of blurring have the same radiance. This allows the relative proportions of the radiance contributions from the object and from the thermal background to the (blurred) pixel value of the sample pixel to be expressed in terms of an object radiance contribution factor and a background radiance contribution factor, which in a simple manner will be related to the number of actual object pixels and the number of actual background pixels, respectively, within the blurring radius from the sample pixel.

Accordingly, the object radiance contribution factor is determined with the assumption that the actual object pixels (in absence of blurring) have a pixel value equal to the diffraction-compensated radiance of the object, and the actual background pixels (in absence of blurring) have a pixel value equal to the representative background radiance.

The "actual object pixels" are "actual" or "true" object pixels in the sense that they, in absence of the blurring, would comprise a radiance contribution from only the object (and not from the thermal background). Correspondingly, the "actual background pixels" are "actual" or "true" background pixels in the sense that they, in absence of the blurring, would comprise a radiance contribution from only the thermal background to the object (and not from the object).

Based on the pixel value of the sample pixel and the determined value of the representative background radiance, the diffraction-compensated radiance may in turn be estimated using the object and background radiance contribution factors.

The pixel-based processing of the method provides a reliable and computationally efficient way of estimating a diffraction-compensated radiance of the object, avoiding the need for performing a full and relatively computationally complex deconvolution. It may also be challenging to determine a kernel, both in terms of coefficients and size, such that the kernel accurately models the inverse of the blurring. The diffraction-compensated radiance may be estimated employing simple arithmetic which lends itself favorably for computationally efficient implementations in a processing device (such as an FPGA) of a thermal image processing system.

By "pixel value" (interchangeably "pixel intensity") is here meant a value (or intensity) of a pixel in a thermal image. For a thermal image, the intensity of a pixel reflects the radiance received from the scene at the pixel. The intensity may also be interpreted as the amount of IR radiation, or the radiant flux received from the scene at the pixel. The intensity is related to temperature via Planck's radiation law. Provided the camera is calibrated, the pixel intensity may hence be accurately translated to temperature.

The "blur parameter" may be defined in terms of blur diameter, or more typically, blur radius. In either case the blur parameter is indicative of the range of pixels over which each pixel is blurred (i.e., smeared or distributed).

In some embodiments, the diffraction-compensated radiance is estimated from a difference between the pixel value of the sample pixel scaled using the object radiance contribution factor, and the representative background radiance scaled using the object radiance contribution factor and the background radiance contribution factor. This approach is based on the physically reasonable assumption that the pixel value of the sample pixel will be a simple weighted sum of the radiance contribution from the object and the radiance contribution from the thermal background. The diffraction-compensated radiance may accordingly be estimated in a computationally simple manner using simple arithmetic operations.

In some embodiments, the diffraction-compensated radiance $L_{obj}$ of the object is based on:

$$L_{obj} = \frac{(L_{tot} - bL_b)}{a}$$

wherein $L_{tot}$ is the pixel value of the sample pixel, $L_b$ is the representative background radiance, $a$ is the object radiance contribution factor and $b$ is the background radiance contribution factor. Hence, the diffraction-compensated radiance $L_{obj}$ may be efficiently and simply estimated by a combination of subtraction and weighting of the pixel intensity of the sample pixel and the representative background radiance.

In some embodiments, the method further comprises:

obtaining a blur function defining a blur amplitude of the blur spot as a function of pixel coordinate relative a center of the blur spot;
determining for each actual object pixel a respective blur amplitude using the blur function; and
determining for each actual background pixel a respective blur amplitude using the blur function,
wherein the object radiance contribution factor is determined as a sum of the respective blur amplitude for each actual object pixel, and
wherein the background radiance contribution factor is determined as a sum of the respective blur amplitude for each actual background pixel.

The determination of the object and background radiance contribution factors may hence amount to simply identifying the one or more actual object pixels and the one or more actual background pixels within the blur radius, determining the respective blur amplitude for each of the identified pixels as defined by the blur function, and computing a respective sum of the respective blur amplitudes over each actual object pixel and each actual background pixel.

The blur function may be constant over the blur radius. That is, the blur function may define a blur amplitude which is constant over the blur radius. The blur function may thus be defined as a rectangular function. This enables the object and background radiance contribution factors to be determined in a straightforward and computationally efficient manner, as each actual object pixel and each actual background pixel within the blur radius will provide a same contribution to the respective contribution factors.

The blur function may alternatively be monotonically decreasing with increasing distance to the center of the blur spot. This may enable a more accurate estimation of the diffraction-compensated radiance since the contribution from each actual object and background pixel to the respective contribution factors may be weighted based on a pixel distance to the sample pixel.

In some embodiments, the object and the background radiance contribution factors are based on the number of actual object pixels and the number of background pixels, respectively, located within the blur radius from the sample pixel along a straight line extending through the sample pixel and a central pixel region of the actual object region.

This allows a further simplification and reduction of the number of computations needed to estimate the diffraction-compensated radiance. The more physically accurate description of the impact of diffraction-induced blurring on the pixels of the thermal image is typically a convolution of the image with a two-dimensional kernel. However, given that the present object is a small, it is contemplated that it may be sufficient to take into account actual object and background pixels along a straight line extending through the sample pixel and the central portion of the actual object region (i.e. along a single dimension), with only a limited loss of precision. As the pixel intensities will be distributed substantially symmetrically about the straight line, the contributions from pixels on either side of the straight line will tend to mutually cancel out.

In some embodiments, the method further comprises obtaining a frequency distribution of pixel values of the thermal image, wherein the representative background radiance is determined as a representative pixel value of at least a portion of the frequency distribution. A representative value of the background radiance of the scene may thus be estimated from statistics of the distribution of pixel values in the thermal image. This enables a reliable and computationally efficient implementation of dynamically estimating the radiance of the thermal background.

By "frequency distribution of pixel values" is here meant a statistical distribution indicative of the number of times different pixel values (or pixel intensities) occur in the thermal image. The frequency distribution may thus be indicative of a frequency distribution of radiance in the scene. The frequency distribution may also be referred to as a histogram. The frequency distribution may indicate either an absolute frequency or a relative frequency of the pixel intensities. The frequency distribution may be "binned", i.e., the frequency may be indicated for a number of bins (i.e., classes or sub-ranges) of pixel intensities defined over the range of pixel intensities, as this may reduce the computational resources required by the method.

In some embodiments, the representative pixel value is one of: a mean, a median, a weighted mean and a mode of the at least a portion pixel frequency distribution. These pixel value statistics each enable a reliable estimate of a representative background radiance from a frequency distribution.

In some embodiments, the method further comprises identifying at least a first peak region in the frequency distribution, wherein the representative pixel value is determined from pixel values within the first peak region.

By "peak in the frequency distribution" is here meant a pixel value, or an interval of at least a predefined number of consecutive pixel values (e.g., one or more bins or sub-ranges of the frequency distribution), for which the frequency exceeds a predefined minimum frequency.

The background radiance in the scene will typically be confined to some interval within the frequency distribution (the absolute position being dependent on the absolute temperature) and hence give rise to a peak region in the frequency distribution. Identifying such a "background peak" and determining the representative pixel value from pixel values within the peak hence enables a reliable estimation of the background radiance.

In some embodiments, the method further comprises identifying a second peak region in the frequency distribution, wherein the representative pixel value is determined from the pixel values within the first peak region but not pixel values within the second peak region.

Some scenes may include areas or objects providing a significant contribution of radiance different from an actual thermal background to the monitored object (whose radiance is to be estimated). Non-limiting examples are a scene including a relatively large area with a clear sky, a surface of water (e.g., a lake or sea, a river) with a temperature differing from the ground on which the monitored object is located. By filtering the frequency distribution to exclude peak regions originating from such non-background sources, a more accurate estimate of a representative background radiance for the object may be obtained.

It is here to be noted that the terms "first" and "second" merely are labels introduced to facilitate reference to the respective peak regions and do not indicate any order or significance of the peaks. Indeed, the first peak region (background peak region) may be found either at higher or lower pixel values than the second peak region (non-background peak region).

In some embodiments, the method further comprises:

identifying, using the blur parameter and the object data, one or more object background pixels located outside and adjacent to the apparent object region; and
determining the representative background radiance from a pixel value of the one or more object background pixels. The representative background radiance may thus be determined from the pixel values of one or more object background pixels. As the object background pixels are identified using the blur radius and the object data, it may be ascertained that the object background pixels indeed are located outside and adjacent to the apparent object region, and hence form part of the thermal background to the object.

In some embodiments, the object background pixels are identified as one or more pixels separated from the actual object region by at least the blur radius. The object background pixels may be identified by adding the blur radius to the pixel coordinates of the actual object region (e.g., the coordinates of an edge pixel of the actual object region).

In some embodiments, the method further comprises:

obtaining a frequency distribution of pixel values of the thermal image;
determining a candidate background radiance as a representative pixel value of at least a portion of the frequency distribution;
identifying, using the blur parameter and the object data, one or more object background pixels located outside and adjacent to the apparent object region;
wherein the one or more object background pixels are comprised in an intermediate background region with an average pixel value different from the candidate background radiance, and the method further comprises, in response to determining that a pixel value of the one or more object background pixels differs from the candidate background radiance by more than a threshold, determining the representative background radiance from a pixel value of one or more pixels of the intermediate background region.

Thereby, a scenario wherein the object is neighboring to or surrounded by an intermediate or local background region with a radiance different from the candidate background radiance (as determined from the frequency distribution), may be detected and handled. A more accurate estimation of the diffraction-based radiance may thus be obtained based on a representative background radiance determined from one or more pixel values of the intermediate background region.

In some embodiments, the method may further comprise, in response to determining that a pixel value of the one or more object background pixels differs from the candidate background radiance by less than the threshold, determining the representative background radiance as the candidate background radiance. Hence, if the difference in radiance is small, the candidate background radiance based on the frequency distribution may be used as the representative background radiance with little or no loss of accuracy.

In some embodiments, the method further comprises:

obtaining an object distance indicating a distance between the object in the scene and the thermal camera;

obtaining a focus distance of the thermal camera for acquiring the thermal image; and

determining the blur parameter by scaling a predetermined default blur parameter indicative of a predetermined default blur radius of the blur spot, in accordance with a difference between the object distance and the focus distance.

A difference between the focus distance setting of the thermal camera and the distance to the object may result in an additional blurring of the object and background radiance contributions, thereby extending the blur radius by defocusing. By scaling the predetermined default blur parameter in accordance with a difference between the object distance and the focus distance, such additional blurring may be accounted for when estimating the diffraction-compensated radiance of the object.

In some embodiments, the thermal image comprises raw thermal image data. The diffraction-compensated radiance of the object may thus be based on the pixel values of the thermal image prior to non-linearization of the raw thermal image data. Non-linearization of the raw thermal image data (interchangeably "raw signal") captured from the thermal image sensor may produce transformed image data with a compressed dynamic range more suitable for viewing by a human and less resource intensive to process further down in the image processing chain. However, a side effect of the non-linearization is a changed distribution of pixel values. The relationship between the thermal background and the object radiance may thus deviate from the actual dynamics within the scene. Accordingly, by basing the method on the pixel values of the raw thermal image data, the diffraction-compensation may be performed early in the processing chain, prior to introducing such distortion in the thermal data. Thus, any reference to pixels and pixel values in the above may be understood as references to pixels and pixel values of the raw thermal image data. In particular, the sample pixel value may be the pixel value of the sample pixel in the raw thermal image data. Moreover, the frequency distribution may be a frequency distribution of pixel intensities of the raw thermal image data.

According to a second aspect, there is provided a computer program product comprising computer program code portions configured to perform the method according to the first aspect or any of the embodiments thereof, when executed by a processing device.

According to a third aspect, there is provided a radiometric thermal camera comprising a processing device configured to perform the method according to the first aspect or any of the embodiments thereof.

The second and third aspects feature the same or equivalent benefits as the first aspect. Any functions described in relation to the first aspect may have corresponding features in a system and vice versa.

BRIEF DESCRIPTION OF THE DRAWINGS

This and other aspects of the present invention will now be described in more detail, with reference to the appended drawings showing embodiments of the present invention.

Fig. 1 is a schematic depiction of an implementation of a thermal camera.

Fig. 2 shows a block diagram of an implementation of an image processing pipeline for a thermal camera.

Fig. 3 schematically shows a thermal image and a corresponding plot of pixel values along a row of pixels extending across an apparent and actual object region of the thermal image.

Fig. 4 is a flow chart of a method for estimating a diffraction-compensated radiance of an object.

Fig. 5a-b schematically show example frequency distributions of thermal images for different scenes.

Fig. 6a-b schematically show examples of blur functions.

Fig. 7 schematically shows a thermal image comprising an apparent and true object region located surrounded by an intermediate thermal background region.

DETAILED DESCRIPTION

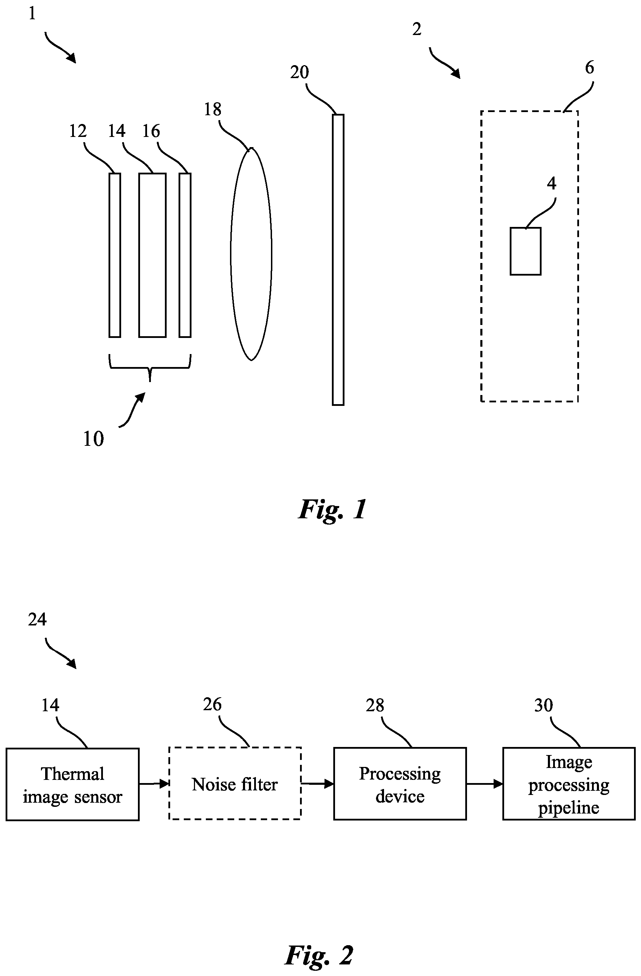

Fig. 1 schematically shows an example implementation of a thermal camera 1 comprising a thermal image sensor 14 (interchangeably "image sensor 14"). The thermal camera 1 may more specifically be a radiometric thermal camera 1. The thermal camera 1 may be calibrated such that the pixel values recorded by the image sensor 14 may be accurately translated to the temperatures within a scene 2 monitored by the thermal camera 1 (i.e., via Planck's radiation law). The image sensor 14 may be of a conventional type, such as a microbolometer sensor comprising a pixel array of microbolometers. A microbolometer sensor may efficiently detect IR radiation in a range of about 7-14 $\mu$m. Microbolometer sensors are commercially available in various resolutions, such as 160$\times$120 pixels, 1024$\times$1024 pixels, 1920$\times$1080 pixels and greater. The image sensor 14 may as shown in Fig. 1 form part of a sensor package 10 further comprising a reflector 12 arranged behind the image sensor 14 and a sensor window 16 arranged in front of the image sensor 14. The reflector 12 may boost the effective fill factor of the image sensor 14 and may for example be a $\lambda/4$ reflector of Au. The sensor package 10 may in some implementations be a vacuum package, wherein the window 16 (which e.g. may be formed of Si) may be arranged as a vacuum seal of the sensor package 10.

The thermal camera 1 further comprises an optical system 18 and a cover 20. In Fig. 1 the optical system 18 is for simplicity shown as a single lens but may in general comprise a number of beamforming optical elements such as lenses and optical filters. The cover 20 is formed of a material transparent to IR radiation in the wavelength range of interest. One example material for the cover 20 is Ge. The optical elements as well as the cover 20 may further be provided with an anti-reflection (AR) coating to reduce internal reflections within the thermal camera 1. One example of a conventional AR coating is Diamond-Like-Coating (DLC).

Fig. 2 is a block diagram of an example implementation of an image processing system 24 which may be comprised in the thermal camera 1, and in which embodiments of the present invention may be implemented.

The image processing system 24 comprises an image sensor 14, a processing device 28, and a downstream image processing pipeline 30.

The image sensor 14 acquires a thermal image of pixels with pixel values depending on the radiance contribution from the part of the scene 2 imaged on the corresponding pixels of the image sensor 14. The thermal image output by the image sensor 14 may comprise raw thermal image data including pixel intensities which have not yet been non-linearized. The non-linearization may further comprise reducing a bit depth of the thermal image data.

The thermal image comprising the raw thermal image data is received for processing by the processing device 28, as will be set out below. The processing device 28 may further forward the thermal image to the downstream image processing pipeline 30.

The downstream image processing pipeline 30 may implement a number of conventional sequential processing steps which for instance may serve to enhance and compress the thermal image data. Examples of such processing steps include noise reduction, global/local detail enhancement, sharpening etc. In particular, the image processing pipeline 30 may implement non-linearization of the raw thermal image data to produce a non-linearized thermal image better suited for viewing by a human than the pixels of the raw thermal image data, as well as bit-depth reduction.

The image processing system 24 may as shown further comprise a noise filter 26. The noise filter may comprise a temporal noise filter and/or a spatial noise filter. While in the illustrated example the noise filter 26 is shown upstream the processing device 28, it is also possible to implement the noise filter 26 downstream the processing device 28, such that the non-linearization and bit-depth reduction is applied prior to denoising.

The processing performed by the noise filter 26, the processing device 28 and the image processing pipeline 30 may be implemented in both hardware and software. In a hardware implementation, each of the method steps set out herein may be realized in dedicated circuitry. The circuitry may be in the form of one or more integrated circuits, such as one or more application specific integrated circuits (ASICs) or one or more field-programmable gate arrays (FGPAs). In a software implementation, the circuitry may instead be in the form of a processor, such as a central processing unit or a graphical processing unit, which in association with computer code instructions stored on a (non-transitory) computer-readable medium, such as a non-volatile memory, causes the processing device 28 to carry out the respective processing steps. Examples of non-volatile memory include read-only memory, flash memory, ferroelectric RAM, magnetic computer storage devices, optical discs, and the like. It is to be understood that it is also possible to have a combination of a hardware and a software implementation, meaning that some method steps may be implemented in dedicated circuitry and others in software.

Referring again to Fig. 1, the scene 2 comprises an object 4. The object 4 is the monitored object, i.e., the object whose radiance is to be estimated. The dashed box 6 schematically indicates a thermal background to the object 4. During image acquisition, radiation emitted from the scene 2 is received by the thermal camera 1, shaped by the optical system 18 and focused onto the pixel array of the image sensor 14. While being transmitted through the optical system 18, the radiation received from the scene 2 will be diffracted. Assuming the diffraction is comparable to the pixel size of the image sensor 14, the diffraction will be seen as a blurring of the edges of the scene 2 in the thermal image.

In many applications, a diffraction-induced blurring in the thermal image may be ignored as the objects monitored in typical thermal imaging applications tend to be of such sizes that blurred object edges typically will not preclude object identification and/or tracking. Neither is it expected that such blurring will have any substantial adverse impact on temperature measurements, provided the sizes of the monitored objects are such that at least a portion of the pixels depicting the respective objects are distanced from the thermal background by more than the blur radius (e.g., by a few pixels or more).

The present disclosure is on the other hand applicable to thermal imaging of a "small object", which means that due to blurring, the pixel region of the thermal image depicting the object only includes mixed pixels including a blend of the radiance contribution from the object and a radiance contribution from the thermal background to the object. It is contemplated that the main contribution to the blurring comes from diffraction of the incident radiation in the thermal camera 1 (e.g., in the optical system 18 thereof) during image capture. However, there may also be additional blurring due to defocusing of the object 4, and multiple reflections in the sensor package 10.

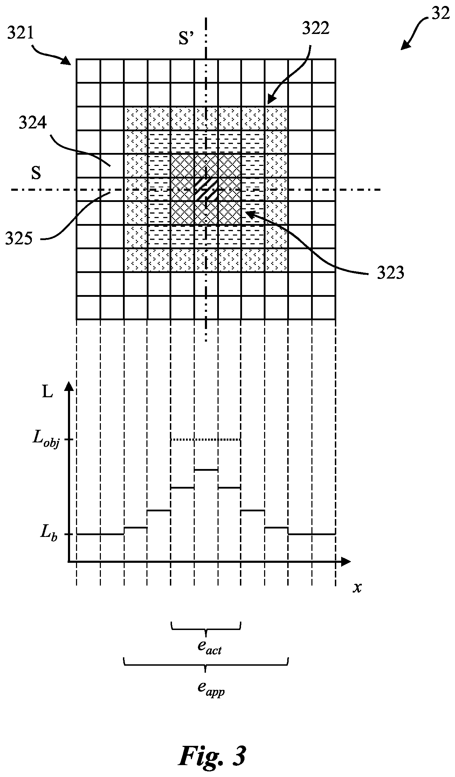

Fig. 3 schematically shows a representation of a thermal image 32 acquired by an image sensor of a thermal camera, such as the image sensor 14 of the thermal camera 1, and depicting a scene comprising a "small object", such as the object 4 of the scene 2. It is to be understood that the pixels of the thermal image 32 shown in Fig. 3 may be a subset of a considerably larger number of pixels of the thermal image 32 (e.g., 160×120 pixels, 1024×1024 pixels, 1920×1080 pixels or more).

The thermal image 32 comprises a background region 321 surrounding an apparent object region 322. The apparent object region 322 depicts the object 4. The background region 321 depicts the thermal background 6 to the object 4. The thermal image 32 further comprises an actual object region 323 forming a sub-region of the apparent object region 322. The pixels of the actual object region 323 thus form a (strict) subset of the pixels of the apparent object region 322. The actual object region 323 forms a region of pixels such that each pixel value of the pixels in the actual object region 323, in absence of blurring, would comprise a radiance contribution from the object 4 but not the thermal background 6. However, due to the blurring, the depiction of the object 4 in the thermal image 32 is blurred to form the blurred apparent object region 322. More specifically, each pixel of the apparent object region 322 is a mixed pixel having a pixel value comprising a radiance contribution from the object 4 and a radiance contribution from a thermal background 6.

This may further be seen in the lower portion of Fig. 3, showing a plot of pixel values along a row scan of pixels along the dash-dotted line S extending across a central portion of the apparent and actual object regions 322, 323 of the thermal image 32. As schematically indicated in the plot, the blurring modulates the actual radiance $L_{obj}$ profile of the object 4 (dashed line) into a broader apparent radiance profile having a peak value less than $L_{obj}$ and a smoother transition to the radiance $L_b$ of the thermal background 6 (full line). The different fill patterns of the pixels within the apparent object region 322 and the actual object region 323 are intended to signify the varying pixel values in the apparent object region 322. Accordingly, none of the pixel values of the "mixed" pixels of the apparent object region 322 will correctly reflect the actual radiance of the object 4, and consequently result in an incorrect temperature measurement of the object 4.

In Fig. 3 the diffraction widens the actual object region 323 from $e_{act}$ = 3 pixels to an apparent object region 322 of width $e_{app}$ = 7. This may for correspond to what would be obtained for a blur radius of about 1.5 to 2 pixels. As may be appreciated, a greater blur radius would result in additional widening. Furthermore, in the illustrated example the apparent object region 322 is 7x7 pixels and the actual object region 323 is 3x3 pixels. These are however merely examples and other dimensions and shapes of the apparent and actual object regions 322, 323 are also possible.

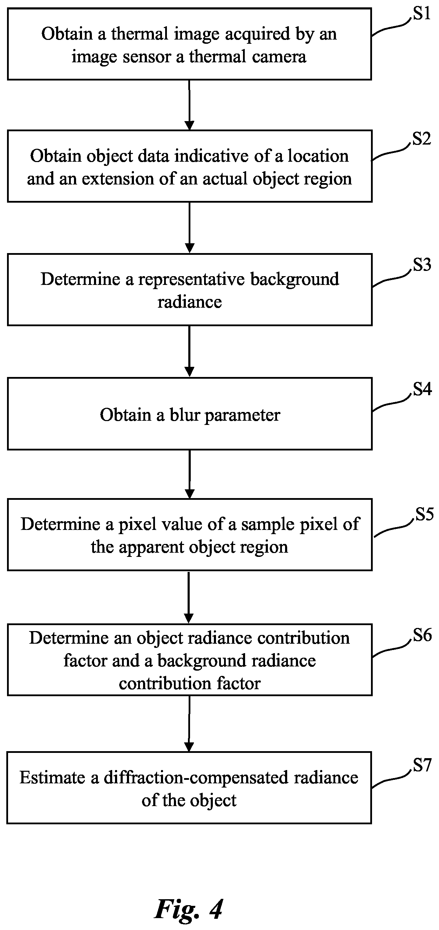

Implementations of a method for estimating a diffraction-compensated radiance of a small object will now be described with reference to the flow chart of Fig. 4, and with further reference to Fig. 1-3.

At step S1, the processing device 28 obtains a thermal image 32 of the scene 2 acquired by the image sensor 14 of the thermal camera 1. The thermal image 32 comprises the apparent object region 322 depicting the object 4. Due to blurring in the thermal camera 1 (i.e. in the optical system 18 thereof) each pixel value in the apparent object region 322 comprises a radiance contribution from the object 4 (of actual radiance $L_{obj}$) and a radiance contribution from the thermal background 6 (of background radiance $L_b$).

At step S2, the processing device 28 obtains object data indicative of a location and an extension of the actual object region 323 in the thermal image 32. As mentioned above, the actual object region 323 forms a sub-region of the apparent object region 322 and is such that each pixel value in the actual object region 323, in absence of the blurring, would comprise a radiance contribution from the object 4 but not the thermal background 6.

The object data may for instance be obtained in the form of corners of a bounding box of the actual object region 323. In a typical scenario it is envisaged that an operator or user of the thermal camera 1 knows the position of the object 4 in the scene 2, and its corresponding location and extension in the thermal image 32. The object data may thus be obtained in the form of user input data to the processing device 28.

However, also automated approaches based on image recognition are possible. For instance, in a monitoring system combining thermal and visual light monitoring, both a thermal image and a visible light image of the scene 2 may be acquired by a thermal camera and a visual light camera, respectively. The visible light image may be processed (e.g., by the processing device 28) to determine a location and extension of the object 4 in the visible light image. Object data indicative of the location and the extension of the actual object region 323 in the thermal image by 32 may then be obtained by mapping the location and extension of the object 4 in the visible light image to spatially corresponding coordinates in the thermal image 32. Due to the shorter wavelengths of visible light, the visible light image is expected to present considerably less amounts of blurring, thus allowing the location and extension of an actual (non-blurred) object region 323 in the thermal image 32 to be estimated.

At step S3, the processing device 28 determines a representative background radiance (which may be denoted $L_b$) of the thermal background 6. Various approaches for determining a representative background radiance are possible.

A representative background radiance may for instance be determined using a frequency distribution- or histogram-based approach. The processing device 28 may obtain a frequency distribution of pixel values of the thermal image 32 (which e.g., may be raw thermal image data). In some implementations, the processing device 28 may compute the frequency distribution of the pixel intensities of the thermal image 32. In other implementations, a frequency distribution may already be provided by the thermal image sensor 14, together with the thermal image 32. The processing device 28 may in this case obtain the frequency distribution by receiving the frequency distribution from the thermal image sensor 14. In either case, the frequency distribution may advantageously be defined for a plurality of bins of pixel intensities, partitioning the dynamic range of the thermal image. The number and width of the intensity bins may vary depending on the computing resources of the processing device 28, and on the required precision of the frequency distribution analysis. While a binned frequency distribution may reduce the computational resources required by the method, use of a non-binned frequency distribution is not precluded.

In either case, the processing device 28 may process the frequency distribution to determine the representative background radiance as a representative pixel value of at least a portion of the frequency distribution. The representative pixel value may for instance be determined as one of: a mean, a median, a weighted mean and a mode of the at least a portion of the frequency distribution. The representative pixel value may be determined from the full frequency distribution (including the pixel intensities of all pixels of the thermal image 32) or from only a portion of the frequency distribution.

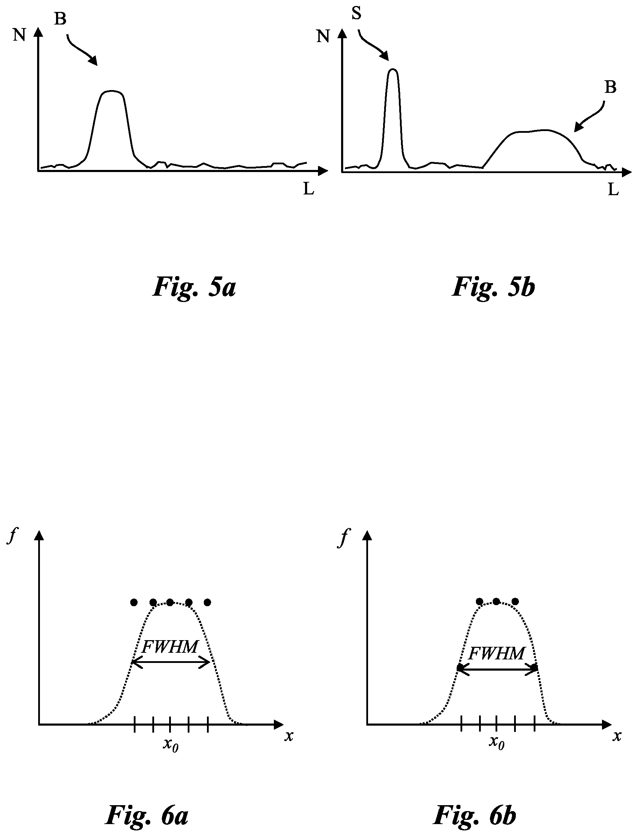

With reference to Fig. 5a showing an example of a frequency distribution, the processing device 28 may for instance identify at least a first peak region B in the frequency distribution, and determine the representative pixel value from pixel values within the first peak region B. The background radiance in the scene 2 will typically be confined to some relatively broad interval within the frequency distribution (the absolute position being dependent on the absolute temperature) and hence give rise to a peak region in the frequency distribution (a mode of the peak being dependent among others on the width of the peak region B and on the total number of pixels of the thermal image 32). The representative pixel value may thus be determined as a mean, a median, a weighted mean or a mode of the pixel values of the first peak region B of the frequency distribution.

With reference to Fig. 5b showing another example of a frequency distribution, the processing device 28 may for instance further identify a second peak region S in the frequency distribution, and filter out the pixel intensities within the second peak region S when determining the representative pixel value such that the representative pixel value is determined from the pixel values within the first peak region B but not the pixel values within the second peak region S. The second peak region S may for instance be excluded from the determination of the representative pixel value on the basis of being narrower than the first peak region B, and/or being removed from a (e.g., predetermined) range of pixel values expected from the thermal background 6 by more than a threshold.

Instead of a frequency distribution-based approach for estimating the representative background radiance, the processing device 28 may determine the representative background radiance from a pixel value of one or more object background pixels 324, 325 located outside and adjacent to the apparent object region 322 (see Fig. 3). The processing device 28 may identify the one or more object background pixels 324, 325 using the blur parameter and the object data including the location and the extension of the actual object region 323. The processing device 28 may for instance identify the object background pixel(s) 324, 325 by adding or subtracting the blur radius (expressed in units of pixels) from e.g. one of the coordinates of the coordinate pair (e.g., x,y) of one or more edge pixels of the actual object region 323. The object background pixel(s) 324, 325 may thus be identified as one or more pixels separated from the actual object region 322 by at least the blur radius. In case a single object pixel is identified (e.g., object pixel 324), the representative pixel value may subsequently be determined as the pixel value of the single identified object pixel 324. In case two or more object pixels are identified (e.g., object pixels 324 and 325), the representative pixel value may subsequently be determined as a mean, a median, a weighted mean or a mode of the pixel values of the object pixels.

At step S4, the processing device 28 obtains a blur parameter indicative of a blur radius of the blur spot of the blurring produced during imaging using the thermal camera 1. The blur parameter, as obtained by the processing device 28, may conveniently be expressed in terms of the blur radius of the blur spot. However, the blur parameter as obtained may also be expressed as the blur diameter of the blur spot, which evidently also is indicative of the blur radius (as they are simply related by a factor of two). The blur parameter may be obtained in terms of units of pixels. That is, the blur parameter as obtained by the processing device 28 may be the blur radius or blur diameter of the blur spot in terms of an integer number of pixels (e.g., 2 pixels, 3 pixels, etc.) or a fractional number of pixels (e.g., 1.5 pixel, 2.5 pixel, etc.). However, the blur parameter may also be obtained in terms of blur radius or blur diameter in metric units (e.g., $\mu$m) wherein the processing device 28 may convert the blur parameter to pixel units based on a known pitch of the pixels of the image sensor, to facilitate the subsequent processing. In any case, the blur parameter (e.g., the blur radius or equivalently the blur diameter) may be a predetermined value, determined during characterization (e.g., typically off-line, prior to deployment) by measuring the modulation transfer function (MTF) of the thermal camera 1, or using some other conventional approach for characterizing the blurring of an imaging system. The blur radius or blur diameter may for instance be derived from the full width at half maximum (FWHM) of a blurred feature of a test target (e.g., a line pattern or spot pattern) focused onto the image sensor and imaged by the thermal camera 1.

According to another implementation, the processing device 28 may instead derive the blur parameter from the object data representing the actual object region and apparent object data indicative of a location and an extension of the apparent object region 322 in the thermal image 32. The processing device 28 may thus determine the blur parameter, e.g., in terms of the blur radius, by comparing the relative sizes of the actual object region 323 and the apparent object region 322. The apparent object data may for instance, like the object data representing the actual object region, be obtained in the form of corners of a bounding box of the apparent object region 322 provided as user input from an operator or user of the thermal camera 1 which may visually identify the apparent object region 322 from the thermal image 32.

At step S5, the processing device 28 determines a pixel value (which may be denoted $L_{tot}$) of a sample pixel of the apparent object region 322. In principle, any pixel within the apparent object region 322 may be selected as the sample pixel. However, selecting the sample pixel as a pixel in the actual object region 323 (such as a center pixel of the actual object region 323) may make the method less sensitive to noise, as it may be expected that pixels within the actual object region 323 will have pixel values farther removed from the background radiance.

At step S6, the processing device 28 determines an object radiance contribution factor (which may be denoted $a$) and a background radiance contribution factor (which may be denoted $b$). The object radiance contribution factor $a$ is based on a number of actual object pixels located within the blur radius from the sample pixel. The background radiance contribution factor $b$ is based on a number of actual background pixels located within the blur radius from the sample pixel. As may be appreciated from Fig. 3, an actual object pixel is a pixel within the actual object region 323 and an actual background pixel is a pixel outside the actual object region 323. Depending on the location of the sample pixel within the apparent object region 322, each actual background pixel considered for the purpose of determining the background radiance contribution factor $b$ may either be located outside the actual object region 323 but within the apparent object region 322, or outside the apparent object region 322.

While the flow chart of Fig. 4 depicts steps S2-S6 as successive steps, this is merely an example and other orders of the steps are also possible. For instance, steps S3-S5 may be performed in any order, or in parallel. It is also possible to perform either of steps S3-S4 prior to or in parallel to step S2.

At step S7, the processing device 28 estimates a diffraction-compensated radiance of the object 4 (which may be denoted $L_{obj}$) based on the pixel value of the sample pixel ($L_{tot}$), the representative background radiance ($L_b$), and the object and background radiance contribution $a$ and $b$ factors.

As noted above, assuming that the pixel value ($L_{tot}$) of the sample pixel is a simple weighted sum of the radiance contribution from the object and the radiance contribution from the thermal background, the diffraction-compensated radiance ($L_{obj}$) may be estimated from a difference between the pixel value of the sample pixel ($L_{tot}$) scaled using the object radiance contribution factor $a$, and the representative background radiance scaled using the object radiance contribution factor $a$ and the background radiance contribution factor $b$.

This approach is represented by equation 1:

$$L_{obj} = \frac{(L_{tot} - bL_b)}{a} \qquad (\text{Eq. } 1)$$

The form of this equation may be derived from:

$$L_{tot} = aL_{obj} + bL_b \qquad (\text{Eq. } 2)$$

and solving for $L_{obj}$.

Assuming that, in absence of blurring, the actual object pixels would have a pixel value equal to the diffraction-compensated radiance $L_{obj}$ of the object 4, and that the actual background pixels would have a pixel value equal to the representative background radiance $L_b$, the object and background radiance contribution factors $a$, $b$ may be determined as the respective fractions of the pixels located within the blur radius from the sample pixels being actual object pixels and actual background pixels, respectively. Hence, the processing device 28 may count the number of actual object pixels $N_{obj}$ and the number of actual background pixels $N_b$ and compute $a = N_{obj}/(N_{obj} + N_b)$ and $b = N_b/(N_{obj} + N_b)$.

According to a further implementation, the processing device 28 may at S4, in addition to the blur parameter, obtain a blur function $F$. The blur function $F$ defines the blur amplitude $f$ of the blur spot as a function of pixel coordinate $x$ relative a center of the blur spot $x_0$. It is sufficient to define the blur function $F$ over the range given by the blur parameter (e.g., blur radius or blur diameter) as, naturally, the blur radius corresponds to the maximum range of pixels over which the center pixel is blurred. However, it is also possible to define the blur function $F$ such that $f$ is zero outside the range given by the blur parameter. To facilitate subsequent processing, the blur function $F$ may be normalized.

Fig. 6a-b show examples of two different forms of blur functions $F$. In both figures, the dashed outline shows an actual amplitude distribution of the blur spot, while the dots show the corresponding shape of the blur function $F$, which in the illustrated examples are defined as discrete functions in units of pixels about the center $x_0$.

Fig. 6a is an example of a constant blur function $F$, which basically has the form of a rectangular window. Fig. 6b is an example of a more elaborate blur function $F$ which presents a decreasing amplitude $f$ towards the edges of the blur spot, blur function $F$ thus defining a trapezoidal shape. In Fig. 6a-b, the blur radius corresponds to about half of the FWHM of the blur spot (2 pixels), however other definitions are also possible. It is further noted that the rectangular and trapezoidal shapes of the illustrated blur functions $F$ merely are exemplary and that other more complex shapes, more closely approximating e.g., a Gaussian function, could also be contemplated.

Accordingly, using the blur function $F$ (e.g., of Fig. 6a or Fig. 6b), the processing device 28 may determine a respective blur amplitude for each of the actual object pixels, and a respective blur amplitude for each of the actual background pixels. The blur amplitude for a pixel may be determined by determining a coordinate of the pixel relative the sample pixel (which corresponds to a distance to the sample pixel) and determining the blur amplitude for the pixel using the relative pixel coordinate (i.e., the distance) as input to the blur function $F$. This corresponds to using the coordinate of the sample pixel as the center pixel $x_0$ of the blur function $F$.

The processing device 28 may further determine the object radiance contribution factor $a$ as the sum of the blur amplitudes determined for the actual object pixels, and the background radiance contribution factor $b$ as the sum of the blur amplitudes determined for the actual background pixels. In a scenario wherein the extent of the actual object region 323, and the location of the sample pixel, is such that there is only a single actual object pixel within the blur radius, the sum will simply be the value of the blur amplitude for the actual object pixel. This applies correspondingly to a scenario wherein there is only a single actual background pixel.

Fig. 6a-b depicts the blur functions as one-dimensional functions, i.e., along a single image or pixel dimension. However, a one-dimensional blur function may be used also to characterize a two-dimensional blurring since diffraction-induced blur typically tends to be rotationally symmetric, or at least for the purposes of the present method to a good approximation may be assumed to be rotationally symmetric. Thus, the actual object pixel(s) may be identified as each pixel of the thermal image 32 located within a two-dimensional region with a radius corresponding to the blur radius and centered on the sample pixel, and which belongs to the actual object region 323. Correspondingly, the actual background pixel(s) may be identified as each pixel of the thermal image 32 located within said two-dimensional region and which is outside the actual object region 323. Hence, the radiance contributions from all pixels falling within the blur spot centered on the sample pixel may be taken into account for estimating the diffraction-compensated radiance $L_{obj}$ of the object 4.

However, to reduce the amount of pixel data to process the estimation may be simplified to take into account pixel values only along a single dimension. Accordingly, the processing device 28 may, when determining the object and the background radiance contribution factors $a$ and $b,$ consider only pixels of the thermal image 32 which are located along a straight line extending through the sample pixel and a central pixel region of the actual object region 32 as either actual object pixels or actual background pixels. With reference to the example thermal image 32 of Fig. 3, the actual object pixels or actual background pixels may be identified along the dash-dotted line S, or the dash-dot-dotted line S'. A further example would be along a diagonal line. The central pixel region may be the center pixel, or one of the center pixels, of the actual object region 323. The central pixel region may be indicated in the object data for the actual object region 323. However, the central pixel region may also be determined by the processing device 28 by determining the pixel coordinate of the center-of-mass or centroid of the actual object region 323.

Denoting the pixel in the top left corner $(x, y) = (0, 0)$ the center pixel of the actual object region 323 is $(5, 5)$. Determining for instance the sample pixel as the center pixel $(5, 5)$, and assuming a blur radius of 2 pixels, the actual object pixels within the blur radius along line S are $(4, 5)$, $(5, 5)$ and $(6, 5)$, while the actual background pixels within the blur radius along line S are $(3, 5)$ and $(7, 5)$. A constant / rectangular blur function F defined over the blur range provides a blur amplitude $f = [\frac{1}{5}, \frac{1}{5}, \frac{1}{5}, \frac{1}{5}, \frac{1}{5}]$. The object radiance contribution factor $a$ thus becomes $a = \frac{1}{5} + \frac{1}{5} + \frac{1}{5} = \frac{3}{5}$ and the background radiance contribution factor $b$ becomes $b = \frac{1}{5} + \frac{1}{5} = \frac{2}{5}$. From Eq. 1, the diffraction-compensated radiance may be estimated as $L_{obj} = \frac{(L_{tot} - 2/5 L_b)}{3/5}$.

On the other hand, the actual object pixels within the blur radius along line S' are $(5, 4)$, $(5, 5)$ and $(5, 6)$, while the actual background pixels within the blur radius along line S are $(5, 3)$ and $(5, 7)$. With the same blur function $F$ as above, the object and background radiance contribution factors $a, b$ are thus the same as in the preceding example.

Determining instead the sample pixel as pixel $(3, 5)$, and still assuming a blur radius of 2 pixels, the actual object pixels within the blur radius along line S are $(4, 5)$ and $(5, 5)$, while the actual background pixels within the blur radius along line S are $(1, 5)$, $(2, 5)$ and $(3, 5)$. With the same blur function $F$ as above, the object and background radiance contribution factors are $a = \frac{2}{5}$ and $b = \frac{3}{5}$. From Eq. 1, the diffraction-compensated radiance may be estimated as $L_{obj} = \frac{(L_{tot} - 3/5 L_b)}{2/5}$, where it is to be noted that $L_{tot}$ for sample pixel $(3, 5)$ differs from $L_{tot}$ for sample pixel $(5, 5)$.

The above discussion are merely a few non-limiting and illustrative example, and a corresponding approach may be used for apparent object regions of different shapes, different blur radiuses, and other forms of blur functions $F$.

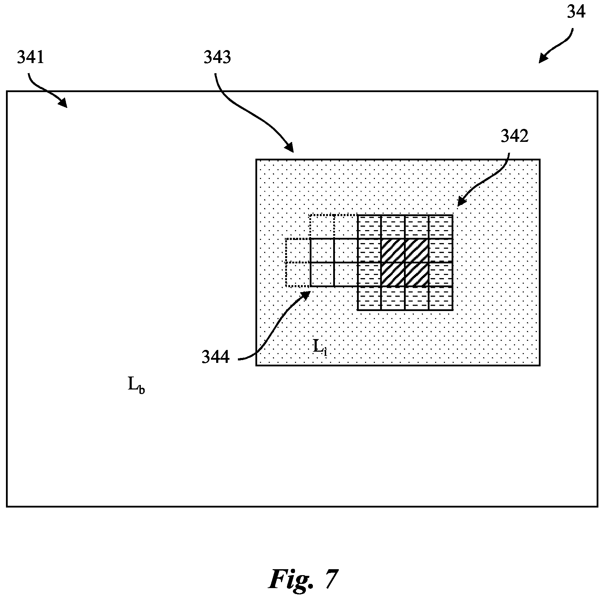

Fig. 7 illustrates a further approach for determining the representative background radiance in step S3 of the flow chart of Fig. 4. The approach of Fig. 7 combines a frequency distribution-based approach with an object background pixel-based approach, and may in particular be useful in case it is known, or expected, that the object 2 to be monitored is surrounded by an intermediate background region with a radiance potentially different from an overall surrounding thermal background of the scene.

Fig. 7 accordingly depicts a thermal image 34 comprising an apparent object region 342. By way of example, the diagonal hatching represents a 2x2 actual object region within the apparent object region 342 of size 4x4. The apparent object region 342 is further surrounded by an intermediate background region 343 with an average radiance $L_i$ which potentially may differ from the (average) radiance $L_b$ of a surrounding overall thermal background region 341 of the scene.

In a first step, the processing device 28 obtains a frequency distribution of pixel values of the thermal image 34. In a second step, the processing device determines a candidate background radiance as a representative pixel value of at least a portion of the frequency distribution. The first and second steps may be implemented using any of the approaches discussed above in connection step S3 of Fig. 4. For simplicity, it will be assumed that the candidate background radiance is approximately equal to the radiance $L_b$ of the thermal background region 341.

In a third step, the processing device 28 identifies, using the blur parameter of the blurring and the object data, one or more object background pixels (indicated by pixel region 344) located outside and adjacent to the apparent object region 322. This step may be implemented in the same manner as the object background pixels 324, 325 discussed above.

In the illustrated example, the one or more object background pixels 344 are however comprised in the intermediate background region 343. Hence, the radiance $L_i$ of the intermediate background region, rather than the radiance $L_b$ of a surrounding overall thermal background region 341 will be blended with the radiance contribution from the object in the apparent object region 342. Accordingly, the processing device 28 determines whether a pixel value of the one or more object background pixels 344 differs from the candidate background radiance $L_b$ of the thermal background region 341 by more than a threshold $T$. In response to determining that the pixel value of the one or more object background pixels 344 differs from the candidate background radiance $L_b$ of the thermal background region 341 by more than the threshold $T$, the processing device 28 determines the representative background radiance from a pixel value of one or more pixels of the intermediate background region 343. The representative background radiance may for instance be determined as a mean, a median, a weighted mean or a mode of the pixel values of the object pixels 344, or one or more other object pixels in the intermediate background region 343 separated from the background region 341 by at least the blur radius. In response to determining that the pixel value of the one or more object background pixels 344 does not differ from the candidate background radiance $L_b$ of the thermal background region 341 by more than the threshold $T$, the processing device 28 may instead determine the representative background radiance as the candidate background radiance $L_b$.

The person skilled in the art realizes that the present invention by no means is limited to the preferred embodiments described above. On the contrary, many modifications and variations are possible within the scope of the appended claims. For example, in the above discussion, the blur parameter is a predetermined parameter, thus indicative of a predetermined blur radius. However, the blur parameter may also be a variable parameter determined based on the focus setting of the thermal camera 1 used when capturing the thermal image 32, and an object distance indicating a distance between the object 4 and the thermal camera 1. The object distance may be obtained for instance as part of the object data, which as mentioned above may be supplied as user input by an operator knowing the distance to the object 4. The processing device 28 may obtain the focus distance from the optical system 18 of the thermal camera 1, or from focus metadata included as metadata supplied by the image sensor 14 together with the thermal image 32. The processing device 28 may determine the blur parameter by scaling a predetermined default blur parameter indicative of a predetermined default blur radius of the blur spot in accordance with a difference between the object distance and the focus distance. If the object 4 is out of focus, this will result in an additional blurring of image of the object 4. The additional blurring may be modeled by scaling the blur radius in accordance with the difference between the object distance and the focus distance.

**Claims**

1.  A computer-implemented method for estimating a radiance of an object (4) in a scene (2), the method comprising:

    obtaining a thermal image (32) of the scene (2), wherein the thermal image is acquired by an image sensor (14) of a radiometric thermal camera (1), wherein the thermal image (32) comprises an apparent object region (322) depicting the object (4), and wherein, due to blurring of the thermal image caused by diffraction, each pixel value in the apparent object region comprises a radiance contribution from the object (4) and a radiance contribution from a thermal background (6);

    obtaining object data indicative of a location and an extension of an actual object region (323) forming a sub-region of the apparent object region (322), wherein the actual object region (323) is such that each pixel value in the actual object region (323), in absence of blurring, would comprise a radiance contribution from the object (4) but not the thermal background (6);

    determining a representative background radiance of the thermal background (6);

    obtaining a blur parameter indicative of a blur radius of a blur spot;

determining a pixel value of a sample pixel of the apparent object region (322);

determining for the sample pixel: an object radiance contribution factor based on a number of actual object pixels located within the blur radius from the sample pixel, and a background radiance contribution factor based on a number of actual background pixels located within the blur radius from the sample pixel, wherein each actual object pixel is a pixel within the actual object region (323) and each actual background pixel is a pixel outside the actual object region (323); and

estimating a diffraction-compensated radiance of the object (4) based on the pixel value of the sample pixel, the representative background radiance, and the object and background radiance contribution factors.

2. The method according to claim 1, wherein the diffraction-compensated radiance is estimated from a difference between the pixel value of the sample pixel scaled using the object radiance contribution factor, and the representative background radiance scaled using the object radiance contribution factor and the background radiance contribution factor.

3. The method according to claim 2, wherein the diffraction-compensated radiance $L_{obj}$ of the object (2) is estimated based on:

$$L_{obj} = \frac{(L_{tot} - bL_b)}{a}$$

wherein $L_{tot}$ is the pixel value of the sample pixel, $L_b$ is the representative background radiance, $a$ is the object radiance contribution factor and $b$ is the background radiance contribution factor.

4. The method according to any one of the preceding claims, further comprising:

obtaining a blur function defining a blur amplitude of the blur spot as a function of pixel coordinate relative a center of the blur spot;

determining for each actual object pixel a respective blur amplitude using the blur function; and

determining for each actual background pixel a respective blur amplitude using the blur function,

wherein the object radiance contribution factor is determined as a sum of the respective blur amplitude for each actual object pixel, and

wherein the background radiance contribution factor is determined as a sum of the respective blur amplitude for each actual background pixel.

5. The method according to claim 4, wherein the blur function is constant over the blur radius, or wherein the blur function is monotonically decreasing with increasing distance to the center of the blur spot.

6. The method according to any one of the preceding claims, wherein the object and the background radiance contribution factors are based on the number of actual object pixels and the number of background pixels, respectively, located within the blur radius from the sample pixel along a straight line extending through the sample pixel and a central pixel region of the actual object region (323).

7. The method according to any one of the preceding claims, further comprising obtaining a frequency distribution of pixel values of the thermal image, wherein the representative background radiance is determined as a representative pixel value of at least a portion of the frequency distribution.

8. The method according to claim 7, further comprising identifying at least a first peak region (B) in the frequency distribution, wherein the representative pixel value is determined from pixel values within the first peak region.

9. The method according to claim 8, further comprising identifying a second peak region (S) in the frequency distribution, wherein the representative pixel value is determined from the pixel values within the first peak region (B) but not pixel values within the second peak region (S).

10. The method according to any one of the preceding claims, further comprising:

identifying, using the blur radius and the object data, one or more object background pixels (324, 325) located outside and adjacent to the apparent object region (322); and

determining the representative background radiance from a pixel value of the one or more object background pixels (324, 325).

11. The method according to any one of claims 1-9, further comprising:

obtaining a frequency distribution of pixel values of the thermal image;
determining a candidate background radiance as a representative pixel value of at least a portion of the frequency distribution;
identifying, using the blur parameter and the object data, one or more object background pixels (344) located outside and adjacent to the apparent object region (342);
wherein the one or more object background pixels (344) are comprised in an intermediate background region (343) with an average pixel value different from the candidate background radiance, and the method further comprises, in response to determining that a pixel value of the one or more object background pixels (344) differs from the candidate background radiance by more than a threshold, determining the representative background radiance from a pixel value of one or more pixels of the intermediate background region (343).

12. The method according to any one of the preceding claims, further comprising:

obtaining an object distance indicating a distance between the object in the scene and the thermal camera;
obtaining a focus distance of the thermal camera (1) for acquiring the thermal image (32); and
determining the blur parameter by scaling a predetermined default blur parameter indicative of a predetermined default blur radius of the blur spot in accordance with a difference between the object distance and the focus distance.

13. The method according to any one of the preceding claims, wherein the thermal image comprises raw thermal image data.

14. A computer program product comprising computer program code portions configured to perform the method according to any one of claims 1-13 when executed by a processing device (28).

15. A radiometric thermal camera (1) comprising a processing device (28) configured to perform the method according to any one of claims 1-13.

**Patentansprüche**

1. Computer-implementiertes Verfahren zum Schätzen einer Radianz eines Objekts (4) in einer Szenerie (2), wobei das Verfahren Folgendes umfasst:

Erhalten eines Wärmebilds (32) der Szenerie (2), wobei das Wärmebild durch einen Bildsensor (14) einer radiometrischen Wärmekamera (1) erfasst wird, wobei das Wärmebild (32) eine scheinbare Objektregion (322), die das Objekt (4) darstellt, umfasst, und wobei, aufgrund von Unschärfe des Wärmebilds, verursacht durch Beugung, jeder Pixelwert in der scheinbaren Objektregion einen Radianzbeitrag von dem Objekt (4) und einen Radianzbeitrag von einem Wärmehintergrund (6) umfasst;
Erhalten von Objektdaten, die einen Ort und eine Ausdehnung einer tatsächlichen Objektregion (323), die eine Unterregion der scheinbaren Objektregion (322) bildet, angeben, wobei die tatsächliche Objektregion (323) derart ist, dass jeder Pixelwert in der tatsächlichen Objektregion (323), bei Nichtvorhandensein von Unschärfe, einen Radianzbeitrag von dem Objekt (4) aber nicht von dem Wärmehintergrund (6) aufweisen würde;
Bestimmen einer repräsentativen Hintergrundradianz des Wärmehintergrunds (6);
Erhalten eines Unschärfeparameters, der einen Unschärferadius eines Unschärfeflecks angibt;
Bestimmen eines Pixelwerts eines Probepixels der scheinbaren Objektregion (322);
Bestimmen für das Probepixel: eines Objektradianzbeitragsfaktors auf der Grundlage einer Anzahl von tatsächlichen Objektpixeln, die sich innerhalb des Unschärferadius von dem Probepixel befinden; und eines Hintergrundradianzbeitragsfaktors auf der Grundlage einer Anzahl von tatsächlichen Hintergrundpixeln, die sich innerhalb des Unschärferadius von dem Probepixel befinden, wobei jedes tatsächliche Objektpixel ein Pixel innerhalb der tatsächlichen Objektregion (323) ist und jedes tatsächliche Hintergrundpixel ein Pixel außerhalb der tatsächlichen Objektregion (323) ist; und
Schätzen einer beugungskompensierten Radianz des Objekts (4) auf der Grundlage des Pixelwerts des Probepixels, der repräsentativen Hintergrundradianz und des Objekt- und des Hintergrundradianzbeitragsfaktors.

2. Verfahren nach Anspruch 1, wobei die beugungskompensierte Radianz anhand einer Differenz zwischen dem Pixelwert des Probepixels, skaliert unter Verwendung des Objektradianzbeitragsfaktors, und der repräsentativen Hintergrundradianz, skaliert unter Verwendung des Objektradianzbeitragsfaktors und des Hintergrundradianzbeitragsfaktors, geschätzt wird.

3. Verfahren nach Anspruch 2, wobei die beugungskompensierte Radianz $L_{obj}$ des Objekts (2) geschätzt wird auf der Grundlage von:

$$L_{obj} = \frac{(L_{tot} - bL_b)}{a}$$

wobei $L_{tot}$ der Pixelwert des Probepixels ist, $L_b$ die repräsentative Hintergrundradianz ist, $a$ der Objektradianzbeitragsfaktor ist und $b$ der Hintergrundradianzbeitragsfaktor ist.

4. Verfahren nach einem der vorhergehenden Ansprüche, ferner umfassend:

Erhalten einer Unschärfefunktion, die eine Unschärfeamplitude des Unschärfeflecks als eine Funktion der Pixelkoordinate relativ zu einem Zentrum des Unschärfeflecks definiert;
Bestimmen für jedes tatsächliche Objektpixel einer jeweiligen Unschärfeamplitude unter Verwendung der Unschärfefunktion; und
Bestimmen für jedes tatsächliche Hintergrundpixel einer jeweiligen Unschärfeamplitude unter Verwendung der Unschärfefunktion,
wobei der Objektradianzbeitragsfaktor bestimmt wird als eine Summe der jeweiligen Unschärfeamplitude für jedes tatsächliche Objektpixel, und
wobei der Objektradianzbeitragsfaktor bestimmt wird als eine Summe der jeweiligen Unschärfeamplitude für jedes tatsächliche Hintergrundpixel.

5. Verfahren nach Anspruch 4, wobei die Unschärfefunktion über den Unschärferadius konstant ist oder wobei die Unschärfefunktion monoton mit zunehmender Distanz von dem Zentrum des Unschärfeflecks abnimmt.

6. Verfahren nach einem der vorhergehenden Ansprüche, wobei der Objekt- und der Hintergrundradianzbeitragsfaktor jeweils auf der Anzahl von tatsächlichen Objektpixeln und der Anzahl von Hintergrundpixeln basieren, die sich innerhalb des Unschärferadius von dem Probepixel entlang einer geraden Linie, die sich durch das Probepixel und eine Zentralpixelregion der tatsächlichen Objektregion (323) erstreckt, befinden.

7. Verfahren nach einem der vorhergehenden Ansprüche, ferner umfassend Erhalten einer Häufigkeitsverteilung von Pixelwerten des Wärmebilds, wobei die repräsentative Hintergrundradianz als ein repräsentativer Pixelwert von zumindest einem Teil der Häufigkeitsverteilung bestimmt wird.

8. Verfahren nach Anspruch 7, ferner umfassend Identifizieren zumindest einer ersten Spitzenregion (B) in der Häufigkeitsverteilung, wobei der repräsentative Pixelwert aus Pixelwerten innerhalb der ersten Spitzenregion bestimmt wird.

9. Verfahren nach Anspruch 8, ferner umfassend Identifizieren einer zweiten Spitzenregion (S) in der Häufigkeitsverteilung, wobei der repräsentative Pixelwert aus den Pixelwerten innerhalb der ersten Spitzenregion (B) aber nicht aus Pixelwerten innerhalb der zweiten Spitzenregion (S) bestimmt wird.

10. Verfahren nach einem der vorhergehenden Ansprüche, ferner umfassend:

Identifizieren, unter Verwendung des Unschärferadius und der Objektdaten, eines oder mehrerer Objekthintergrundpixel (324, 325), die sich außerhalb von der und angrenzend an die scheinbare Objektregion (322) befinden; und
Bestimmen der repräsentativen Hintergrundradianz aus einem Pixelwert des einen oder der mehreren Objekthintergrundpixel (324, 325).

11. Verfahren nach einem der Ansprüche 1-9, ferner umfassend:

Erhalten einer Häufigkeitsverteilung von Pixelwerten des Wärmebilds;

Bestimmen einer Kandidatenhintergrundradianz als einem repräsentativen Pixelwert von zumindest einem Teil der Häufigkeitsverteilung;

Identifizieren, unter Verwendung des Unschärfeparameters und der Objektdaten, eines oder mehrerer Objekthintergrundpixel (344), die sich außerhalb von der und angrenzend an die scheinbare Objektregion (342) befinden;

wobei das eine oder die mehreren Objekthintergrundpixel (344) in einer Zwischenhintergrundregion (343) mit einem Durchschnittspixelwert, der sich von der Kandidatenhintergrundradianz unterscheidet, enthalten sind, und das Verfahren ferner umfasst, als Reaktion darauf, dass bestimmt wird, dass ein Pixelwert des einen oder der mehreren Objekthintergrundpixel (344) von der Kandidatenhintergrundradianz um mehr als einen Schwellenwert abweicht, Bestimmen der repräsentativen Hintergrundradianz aus einem Pixelwert von einem oder mehreren Pixeln der Zwischenhintergrundregion (343).

12. Verfahren nach einem der vorhergehenden Ansprüche, ferner umfassend:

Erhalten einer Objektdistanz, die eine Distanz zwischen dem Objekt in der Szenerie und der Wärmekamera angibt;

Erhalten einer Fokusdistanz der Wärmekamera (1) zum Erfassen des Wärmebilds (32); und

Bestimmen des Unschärfeparameters durch Skalieren eines vorbestimmten standardmäßigen Unschärfeparameters, der einen vorbestimmten standardmäßigen Unschärferadius des Unschärfeflecks angibt, gemäß einer Differenz zwischen der Objektdistanz und der Fokusdistanz.

13. Verfahren nach einem der vorhergehenden Ansprüche, wobei das Wärmebild Wärmebildrohdaten umfasst.

14. Computerprogrammprodukt, umfassend Computerprogrammcodeanteile, die ausgelegt sind zum Durchführen des Verfahrens nach einem der Ansprüche 1-13, bei Ausführung durch eine Verarbeitungsvorrichtung (28).

15. Radiometrische Wärmekamera (1), die eine Verarbeitungsvorrichtung (28) umfasst, die ausgelegt ist zum Durchführen des Verfahrens nach einem der Ansprüche 1-13.

**Revendications**

1. Procédé mis en œuvre par ordinateur pour estimer une luminance énergétique d'un objet (4) dans une scène (2), le procédé comprenant :

l'obtention d'une image thermique (32) de la scène (2), l'image thermique étant acquise par un capteur d'images (14) d'une caméra thermique radiométrique (1), l'image thermique (32) comprenant une région d'objet apparent (322) représentant l'objet (4) et, en raison du floutage de l'image thermique provoqué par diffraction, chaque valeur de pixel dans la région d'objet apparent comprenant une contribution à la luminance énergétique de l'objet (4) et une contribution à la luminance énergétique d'un fond thermique (6) ;

l'obtention de données d'objet indicatives d'un emplacement et d'une extension d'une région d'objet réel (323) formant une sous-région de la région d'objet apparent (322), la région d'objet réel (323) étant telle que chaque valeur de pixel dans la région d'objet réel (323), en l'absence de floutage, comprendrait une contribution à la luminance énergétique de l'objet (4), mais pas du fond thermique (6) ;

la détermination d'une luminance énergétique de fond représentative du fond thermique (6) ;

l'obtention d'un paramètre de flou indicatif d'un rayon de flou d'une tache floue ;

la détermination d'une valeur de pixel d'un pixel échantillonné de la région d'objet apparent (322) ;

la détermination, pour le pixel échantillonné, d'un facteur de contribution à la luminance énergétique de l'objet basé sur un nombre de pixels d'objet réel situés à l'intérieur du rayon de flou du pixel échantillonné, et d'un facteur de contribution à la luminance énergétique du fond basé sur un nombre de pixels de fond réel situés à l'intérieur du rayon de flou du pixel échantillonné, chaque pixel d'objet réel étant un pixel situé à l'intérieur de la région d'objet réel (323) et chaque pixel de fond réel étant un pixel situé à l'extérieur de la région d'objet réel (323) ; et

l'estimation d'une luminance énergétique compensée de la diffraction de l'objet (4) sur la base de la valeur de pixel du pixel échantillonné, de la luminance énergétique de fond représentative, et des facteurs de contribution à la luminance énergétique de l'objet et du fond.

**2.** Procédé selon la revendication 1, dans lequel la luminance énergétique compensée de la diffraction est estimée à partir d'une différence entre la valeur de pixel du pixel échantillonné mise à l'échelle au moyen du facteur de contribution à la luminance énergétique de l'objet, et la luminance énergétique de fond représentative mise à l'échelle au moyen du facteur de contribution à la luminance énergétique de l'objet et du facteur de contribution à la luminance énergétique du fond.

**3.** Procédé selon la revendication 2, dans lequel la luminance énergétique compensée de la diffraction $L_{obj}$ de l'objet (2) est estimée sur la base de :

$$L_{obj} = \frac{(L_{tot} - bL_b)}{a}$$

où $L_{tot}$ est la valeur de pixel du pixel échantillonné, $L_b$ est la luminance énergétique de fond représentative, a est le facteur de contribution à la luminance énergétique de l'objet et b est le facteur de contribution à la luminance énergétique du fond.

**4.** Procédé selon l'une quelconque des revendications précédentes, comprenant en outre :

l'obtention d'une fonction de flou définissant une amplitude de flou de la tache floue en fonction d'une coordonnée de pixel par rapport à un centre de la tache floue ;
la détermination, pour chaque pixel d'objet réel, d'une amplitude de flou respective au moyen de la fonction de flou ; et
la détermination, pour chaque pixel de fond réel, d'une amplitude de flou respective au moyen de la fonction de flou,
dans lequel le facteur de contribution à la luminance énergétique de l'objet est déterminé comme une somme de l'amplitude de flou respective pour chaque pixel d'objet réel, et
dans lequel le facteur de contribution à la luminance énergétique du fond est déterminé comme une somme de l'amplitude de flou respective pour chaque pixel de fond réel.

**5.** Procédé selon la revendication 4, dans lequel la fonction de flou est constante sur le rayon de flou, ou dans lequel la fonction de flou diminue de façon monotone avec l'augmentation de la distance jusqu'au centre de la tache floue.

**6.** Procédé selon l'une quelconque des revendications précédentes, dans lequel les facteurs de contribution à la luminance énergétique de l'objet et du fond sont basés sur le nombre de pixels d'objet réel et le nombre de pixels de fond, respectivement, situés à l'intérieur du rayon de flou partant du pixel échantillonné le long d'une ligne droite passant par le pixel échantillonné et une région de pixels centrale de la région d'objet réel (323).

**7.** Procédé selon l'une quelconque des revendications précédentes, comprenant en outre l'obtention d'une distribution de fréquence de valeurs de pixels de l'image thermique, la luminance énergétique de fond représentative étant déterminée comme une valeur de pixel représentative d'au moins une partie de la distribution de fréquence.

**8.** Procédé selon la revendication 7, comprenant en outre l'identification d'au moins une première région de crête (B) dans la distribution de fréquence, la valeur de pixel représentative étant déterminée à partir de valeurs de crête à l'intérieur de la première région de crête.

**9.** Procédé selon la revendication 8, comprenant en outre l'identification d'une deuxième région de crête (S) dans la distribution de fréquence, la valeur de pixel représentative étant déterminée à partir des valeurs de pixel à l'intérieur de la première région de crête (B), mais pas des valeurs de pixel à l'intérieur de la deuxième région de crête (S).

**10.** Procédé selon l'une quelconque des revendications précédentes, comprenant en outre :

l'identification, au moyen du rayon de flou et des données d'objet, d'un ou plusieurs pixels de fond d'objet (324, 325) situés à l'extérieur et au voisinage de la région d'objet apparent (322) ; et
la détermination de la luminance énergétique de fond représentative à partir d'une valeur de pixel du ou des pixels de fond d'objet (324, 325).

**11.** Procédé selon l'une quelconque des revendications 1 à 9, comprenant en outre :

l'obtention d'une distribution de fréquence de valeurs de pixel de l'image thermique ;

la détermination d'une luminance énergétique de fond candidate comme une valeur de pixel représentative d'au moins une partie de la distribution de fréquence ;

l'identification, au moyen du paramètre de flou et des données d'objet, d'un ou plusieurs pixels de fond d'objet (344) situés à l'extérieur et au voisinage de la région d'objet apparent (342),

le ou les pixels de fond d'objet (344) étant compris dans une région de fond intermédiaire (343) avec une valeur de pixel moyenne différente de la luminance énergétique de fond candidate, et le procédé comprenant également, en réponse à la détermination qu'une valeur de pixel du ou des pixels de fond d'objet (344) diffère de la luminance énergétique de fond candidate de plus d'un seuil, la détermination de la luminance énergétique de fond représentative à partir d'une valeur de pixel d'un ou plusieurs pixels de la région de fond intermédiaire (343).

12. Procédé selon l'une quelconque des revendications précédentes, comprenant en outre :

l'obtention d'une distance d'objet indiquant une distance entre l'objet dans la scène et la caméra thermique ;

l'obtention d'une distance focale de la caméra thermique (1) afin d'acquérir l'image thermique (32) ; et

la détermination du paramètre de flou par mise à l'échelle d'un paramètre de flou par défaut prédéterminé indicatif d'un rayon de flou par défaut prédéterminé de la tache floue en fonction d'une différence entre la distance d'objet et la distance focale.

13. Procédé selon l'une quelconque des revendications précédentes, dans lequel l'image thermique comprend des données d'image thermique brutes.

14. Produit-programme informatique comprenant des parties de code de programme informatique conçues pour réaliser le procédé selon l'une quelconque des revendications 1 à 13 lors de leur exécution par un dispositif de traitement (28).

15. Caméra thermique radiométrique (1) comprenant un dispositif de traitement (28) conçu pour réaliser le procédé selon l'une quelconque des revendications 1 à 13.

1

2

6

20

12  14  16

18

4

10

**Fig. 1**

24

14

26

28

30

| Thermal image sensor | → | Noise filter | → | Processing device | → | Image processing pipeline |

**Fig. 2**

**Fig. 3**

Fig. 4

**Fig. 5a**

**Fig. 5b**

**Fig. 6a**

**Fig. 6b**

**Fig. 7**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009144003 A1, Murata

**Non-patent literature cited in the description**

- Optical modeling and simulation of subpixel target infrared detection. **ALVAREZ-RÍOS et al.** Proceedings of the SPIE. SPIE, 12 September 2021, vol. 11865, 1186508-1186508

- Validation of an infrared sensor model with field collected imagery of unresolved unmanned aerial vehicle (UAV) targets. **GEMAR et al.** Proceedings of the SPIE. SPIE, 14 May 2019, vol. 11001